# EUROPÄISCHE PATENTANMELDUNG

(11) **EP 1 396 672 A1**
(43) Veröffentlichungstag der Anmeldung: **10.03.2004**
(21) Anmeldenummer: 03015928.9
(22) Anmeldetag: 12.07.2003
(51) Int. Cl.: F16L 47/03

(54) **Kunststoffrohr**

(30) Priorität: 06.09.2002 DE 20213974 U
(71) Anmelder: HENZE GMBH KUNSTSTOFFWERK, 53840 Troisdorf (DE)
(72) Erfinder: Walterscheid, Heribert, 53271 Siegburg (DE); Fester, Wolfgang, 51145 Köln (DE)
(74) Vertreter: Müller, Thomas Michael, Dipl.-Ing.

(57) **Zusammenfassung**

Die Erfindung betrifft ein Kunststoffrohr aus einem thermoplastischen Kunststoff, gekennzeichnet durch eine Längsachse 3 und einen Anschlussabschnitt 2, der eine konische erste Umfangsfläche 17 aufweist, wobei in die erste Umfangsfläche 17 ein Widerstandsheizdraht umlaufend eingelassen ist und wobei die erste Umfangsfläche 17 zur thermisch-stoffschlüssigen Verbindung mit einer gegengleich ausgebildeten konischen zweiten Umfangsfläche 25 eines Verbindungsabschnitts 8 eines weiteren Kunststoffrohrs 9 bestimmt ist.

## Beschreibung

Die Erfindung betrifft ein Kunststoffrohr, insbesondere ein Wickelrohr, das aus extrudierten Kunststoffbahnen hergestellt ist. Das Kunststoffrohr umfasst eine Längsachse und einen Anschlussabschnitt mit einer ersten Umfangsfläche, wobei in die erste Umfangsfläche ein Widerstandsheizdraht umlaufend eingelassen ist und wobei die erste Umfangsfläche zur thermisch-stoffschlüssigen Verbindung mit einer zweiten Umfangsfläche eines Verbindungsabschnitts eines weiteren Kunststoffrohrs bestimmt ist.

In der EP 0 535 247 B1 ist eine solche Schweißverbindung zwischen zwei Kunststoffrohren gezeigt. Ein erstes Rohr weist einen Anschlussabschnitt mit einer zylindrischen Anschlussbohrung auf, in die durch eine Öffnung der Bohrung ein Verbindungsabschnitt eines zweiten Kunststoffrohres einführbar ist. In die Innenfläche der Anschlussbohrung ist ein Widerstandsheizdraht eingelassen. Dieser verläuft wendelförmig über eine bestimmte Länge der Anschlussbohrung und ist mit zwei Polen zur Verbindung mit einer elektrischen Energiequelle verbunden. Durch Anschluss an die Energiequelle lässt sich der Heizdraht bis zum Schmelzpunkt des Kunststoffmaterials erhitzen, so dass das erste Rohr mit dem zweiten Rohr eine thermische stoffschlüssige Verbindung eingeht.

Bei einer solchen Ausführung des Anschlussabschnitts muss jedoch ein Radialspalt zwischen der Innenumfangsfläche der Aufnahmebohrung und der Außenumfangsfläche des Verbindungsabschnitts des zweiten Kunststoffrohres vorgesehen werden, um das Einführen des Verbindungsabschnitts in die Bohrung des Anschlussabschnittes zu ermöglichen. Um eine umlaufend dichte Verschweißung zu gewährleisten, muss dieses Radialspiel jedoch für den Schweißvorgang beseitigt werden. Hierfür wird in der Regel in das zweite Rohr im Bereich der vorzusehenden Verschweißung eine Scheibe eingesetzt, die sich gegen die Innenfläche des zweiten Rohrs abstützt. Um den Anschlussabschnitt des ersten Rohrs wird in diesem Bereich ein Spannband vorgesehen, durch welches das zweite Kunststoffrohr auf das erste Kunststoffrohr gespannt wird. Hierbei wird das Radialspiel herausgedrückt, so dass die Innenumfangsfläche der Anschlussbohrung in Anlage zur Außenumfangsfläche des Verbindungsabschnittes gelangt. Nach der Verschweißung wird sowohl die Scheibe als auch das Spannband entfernt.

Aufgabe der vorliegenden Erfindung ist es, ein Kunststoffrohr eingangs genannter Art vorzuschlagen, welches ein sicheres und dichtes Verschweißen mit einem anderen Kunststoffrohr gewährleistet und wobei der für die Verschweißung erforderliche Fügedruck einfach aufgebracht werden kann.

Die Aufgabe wird erfindungsgemäß dadurch gelöst, dass die erste Umfangsfläche konisch ausgebildet ist und zur Verbindung mit einer gegengleich ausgebildeten konischen zweiten Umfangsfläche bestimmt ist.

Durch die konische Ausbildung der ersten Umfangsfläche des Anschlussabschnitts ist gewährleistet, dass ein weiteres Kunststoffrohr mit einer gegengleich ausgebildeten konischen zweiten Umfangsfläche einfach zur ersten Umfangsfläche ausgerichtet werden kann. Die konischen Umfangsflächen bewirken eine Führung beim Ineinanderstecken der Kunststoffrohre, so dass beide Kunststoffrohre zueinander zentriert sind.

Ferner ist gewährleistet, dass kein Radialspiel zwischen den konischen Umfangsflächen vorliegt. Somit wird vermieden, dass beim Verschweißen der beiden Kunststoffrohre Luft zwischen den Umfangsflächen eingeschlossen wird, was zu einer fehlerhaften Schweißnaht führen würde. Ferner lässt sich der für die Verschweißung erforderliche Fügedruck durch axiales Verspannen der Kunststoffrohre erzielen. Es müssen keine radialen Kräfte von außen auf das Kunststoffrohr aufgebracht werden. Um möglichst geringe Toleranzen der konischen ersten Umfangsfläche zu gewährleisten, ist diese durch ein spanendes Fertigungsverfahren, wie z. B. Fräsen, hergestellt. Somit ist gewährleistet, dass die konische erste Umfangsfläche plan mit der konischen zweiten Umfangsfläche des weiteren Kunststoffrohres in Anlage ist.

Vorzugsweise ist vorzusehen, dass der Anschlussabschnitt eine umlaufende erste Stirnfläche aufweist, an die sich die erste Umfangsfläche anschließt und die zur Anlage an eine zur ersten Stirnfläche gegengleich ausgebildeten zweiten Anlagefläche des weiteren Kunststoffrohres bestimmt ist.

Hierbei kann an dem der ersten Stirnfläche abgewandten axialen Ende der ersten Umfangsfläche letztere in eine umlaufende erste Anlagefläche übergehen, die zur Anlage an eine zur ersten Anlagefläche gegengleich ausgebildeten zweiten Stirnfläche des weiteren Kunststoffrohres bestimmt ist.

Somit stützt sich das weitere Kunststoffrohr axial gegen die erste Stirnfläche und die erste Anlagefläche ab. Somit ist gewährleistet, dass die beiden Kunststoffrohre nicht zu weit ineinander geschoben werden. Somit wird ein zu großer Fügedruck zwischen der ersten Umfangsfläche und der zweiten Umfangsfläche vermieden. Ferner wird vermieden, dass der Anschlussabschnitt oder der Verbindungsabschnitt zu stark radial deformiert werden.

Bei einer bevorzugten Ausführungsform ist vorgesehen, dass der Anschlussabschnitt eine Anschlussbohrung mit einer die erste Umfangsfläche bildenden konischen Innenumfangsfläche aufweist, wobei in die Anschlussbohrung der Verbindungsabschnitt des weiteren Kunststoffrohres axial durch eine Öffnung der Anschlussbohrung einführbar ist, und wobei die Innenumfangsfläche zur Öffnung hin erweitert ist.

Vorzugsweise schließt die konische Innenfläche mit der Längsachse einen Winkel von 10° bis 25° ein. Ferner kann die erste Stirnfläche rechtwinklig zur konischen Innenfläche verlaufen. Ebenso kann die erste Anlagefläche rechtwinklig zur konischen Innenfläche verlaufen. Somit ist gewährleistet, dass die Stirnfläche und die Anlagefläche einen Winkel zur Längsachse einschließen, der kleiner als 90° ist. Hierdurch ist gewährleistet, dass der Anschlussabschnitt und das weitere Kunststoffrohr radial gegeneinander abgestützt sind. Beim Schweißen dehnt sich das Kunststoffmaterial der Kunststoffrohre aus, so dass durch diese Maßnahme ein Aufklaffen der Stoßkanten vermieden wird.

An dem Kunststoffrohr ist ein dem Anschlussabschnitt abgewandter Verbindungsabschnitt vorgesehen. Dieser weist vorzugsweise eine eine zweite Umfangsfläche bildende konische Außenumfangsfläche auf, die gegengleich zur konischen Innenumfangsfläche ausgebildet ist. Somit lassen sich mehrere dieser Kunststoffrohre miteinander verbinden.

Hierbei kann ebenfalls vorgesehen sein, dass der Verbindungsabschnitt eine umlaufende der ersten Stirnfläche abgewandte zweite Stirnfläche aufweist, an die sich die konische Außenfläche anschließt und die zur Anlage an eine zur zweiten Stirnfläche gegengleich ausgebildeten Anlagefläche des weiteren Kunststoffrohres bestimmt ist und
dass an dem der zweiten Stirnfläche abgewandten axialen Ende der konischen Außenfläche letztere in eine umlaufende zweite Anlagefläche übergeht, die zur Anlage an eine zur zweiten Anlagefläche gegengleich ausgebildeten ersten Stirnfläche des weiteren Kunststoffrohres bestimmt ist.

Um ein axiales Verspannen zweier Kunststoffrohre zu gewährleisten, kann zum einen vorgesehen sein, dass der Anschlussabschnitt eine Außenfläche aufweist, die eine der Öffnung abgewandte umlaufende erste Stützfläche bildet. Ferner kann der Verbindungsabschnitt eine Außenumfangsfläche aufweisen, die eine der Öffnung abgewandte umlaufende zweite Stützfläche bildet.

Das Kunststoffrohr kann aus Polypropylen (PP) oder aus Polyethylen (PE) hergestellt sein. Somit lassen sich entsprechende Kunststoffrohre kostengünstig herstellen. Um chemisch beständige Kunststoffrohre herzustellen, wird vorzugsweise Polyvinyllidenfluorid (PVDF) verwendet.

Bevorzugte Ausführungsbeispiele werden im folgenden anhand der Zeichnungen näher erläutert. Hierin zeigt
- Fig. 1: eine perspektivische Darstellung zweier miteinander verbundener Kunststoffrohre;
- Fig.2: einen Teillängsschnitt durch eine Verbindungsanordnung mit einem Anschlussabschnitt und einem Verbindungsabschnitt im nicht verbundenen Zustand;
- Fig. 3: die Verbindungsanordnung gemäß Fig. 2 im verbundenen Zustand;
- Fig. 4: eine schematische Darstellung der Schaltkreise zweier Widerstandsheizdrähte;
- Fig. 5: einen Teillängsschnitt durch eine Verbindungsanordnung mit einer Ringnut im nicht verbundenen Zustand und
- Fig. 6: einen Teillängsschnitt einer Verbindungsanordnung gemäß Fig. 5 im verbundenen Zustand.

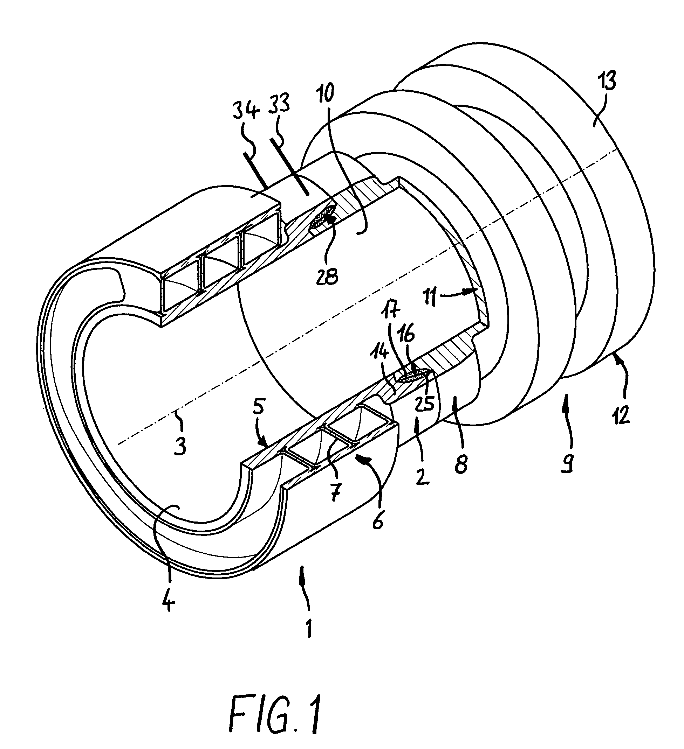

In Fig. 1 ist ein Kunststoffrohr 1 im Teilschnitt dargestellt. Das Kunststoffrohr 1 ist koaxial zu einer Längsachse 3 angeordnet und weist eine zylindrische Innenfläche 4 zum Transport von flüssigen Medien auf. An einem Längsende weist das Kunststoffrohr 1 einen Anschlussabschnitt 2 auf. Ferner weist das Kunststoffrohr 1 einen ersten Rohrkörper 5 und einen um diesen angeordneten zweiten Rohrkörper 6 auf. Der erste Rohrkörper 5 ist aus einem Band aus einem thermoplastischen Kunststoff im Wickelverfahren hergestellt. Der zweite Rohrkörper 6 ist aus einem um den ersten Rohrkörper 5 gewickelten Hohlprofil 7 hergestellt, wobei das Hohlprofil 7 einen quadratischen Querschnitt aufweist. Der zweite Rohrkörper 6 dient zur Stabilisierung des Kunststoffrohres 1.

Das Kunststoffrohr 1 ist über den Anschlussabschnitt 2 mit einem Verbindungsabschnitt 8 eines weiteren Kunststoffrohres 9 verbunden. Das weitere Kunststoffrohr 9 weist ebenfalls eine koaxial zur Längsachse 3 angeordnete Innenfläche 10 auf, welche im verbundenen Zustand der Kunststoffrohre 1, 9 bündig in die Innenfläche 4 übergeht und zum Transport von flüssigen Medien dient. Das weitere Kunststoffrohr 9 ist ebenfalls aus einem zylindrischen ersten Rohrkörper 11 und einem zweiten Rohrkörper 12 aus einem Hohlprofil 13 gefertigt.

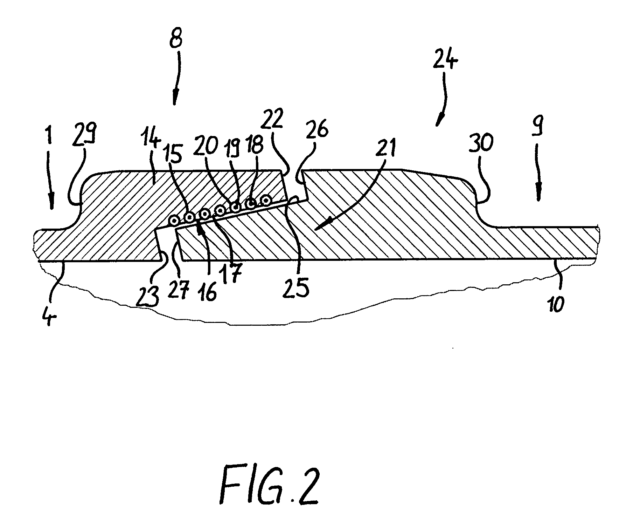

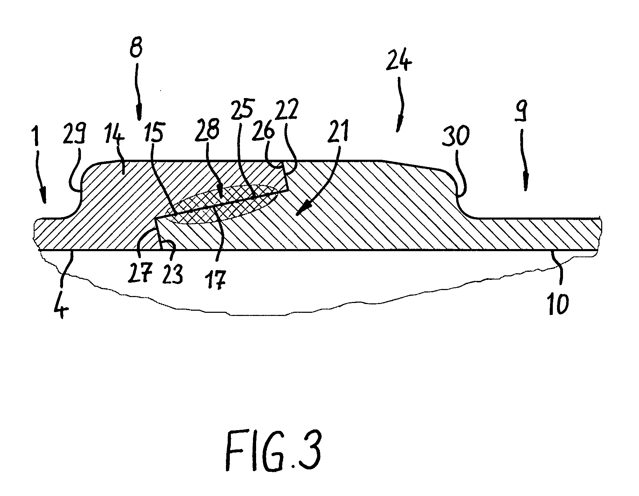

Die Verbindung zwischen dem Anschlussabschnitt 2 und dem Verbindungsabschnitt 8 wird im folgenden, zusammen mit den Fig. 2 und 3 erläutert. Der Anschlussabschnitt 2 umfasst einen Basiskörper 14 sowie einen Widerstandsheizdraht 15. In dem Basiskörper 14 ist eine Anschlussbohrung 16 eingebracht, welche eine erste Umfangsfläche in Form einer konischen Innenumfangsfläche 17 bildet. In die Innenumfangsfläche 17 ist eine wendelförmige Rille 18 eingebracht. In die Rille 18 ist der Widerstandsheizdraht 15 eingelegt, so dass dieser lediglich geringfügig über die Innenumfangsfläche 17 hinausragt.

Der Widerstandsheizdraht 15 weist eine Seele 19 aus einem einen elektrischen Widerstand bildenden Metalldraht auf. Die Seele 19 ist von einer Umhüllung 20 aus einem thermoplastischen Kunststoff umschlossen. Bei der Fertigung des Anschlussabschnitts 2 wird die Umhüllung 20 erhitzt und in die Rille 18 eingedrückt. Dies kann z.B. mit Heißluft geschehen, wobei der Widerstandsheizdraht 15 mit einer Rolle in die Rille 18 gedrückt wird. Somit ist sichergestellt, dass der Widerstandsheizdraht 15 fest mit dem Anschlussabschnitt 2 verbunden ist, so dass dieser beim Transport oder beim Aufschieben auf den Verbindungsabschnitt 8 nicht gelöst werden kann. Vorzugsweise sind die Umhüllung 20 und der Basiskörper 14 aus demselben Kunststoff gefertigt.

Die Anschlussbohrung 16 weist eine Öffnung 21 auf, durch welche der Verbindungsabschnitt 8 des weiteren Kunststoffrohres 9 in die Anschlussbohrung 16 eingeführt werden kann. Die Innenumfangsfläche 17 erweitert sich in Richtung zur Öffnung 21. Der Anschlussabschnitt 2 weist an der Öffnung 21 eine erste Stirnfläche 22 auf, welche in die Innenumfangsfläche 17 übergeht. Die Innenumfangsfläche 17 geht am der ersten Stirnfläche 22 beabstandeten axialen Ende der Innenumfangsfläche 17 in eine erste Anlagefläche 23 über, welche um die Längsachse 3 angeordnet ist.

Der Verbindungsabschnitt 24 des weiteren Kunststoffrohres 9 weist eine gegengleich zur Innenumfangsfläche 17 ausgebildete zweite Umfangsfläche in Form einer Außenumfangsfläche 25 auf. An einem freien Ende des weiteren Kunststoffrohres 9 ist eine zweite Stirnfläche 27 vorgesehen, welche in die Außenumfangsfläche 25 übergeht. An dem der zweiten Stirnfläche 27 entfernt angeordneten axialen Ende der Außenumfangsfläche 25 geht die letztere in eine zweite Anlagefläche 26 über.

Im eingeschobenen Zustand des Verbindungsabschnitts 8 (Fig. 3) befindet sich die Innenumfangsfläche 17 in Anlage zur Außenumfangsfläche 25. Ferner befinden sich die erste Stirnfläche 22 und die zweite Anlagefläche 26 sowie die erste Anlagefläche 23 und die zweite Stirnfläche 27 jeweils in Anlage. Aufgrund der Konusform der Innenumfangsfläche 17 und der Außenumfangsfläche 25 wird das Einführen des Verbindungsabschnitts 8 in die Anschlussbohrung 16 erleichtert. Ferner ist gewährleistet, dass zwischen der Innenumfangsfläche 17 und der Außenumfangsfläche 25 kein Radialspiel vorhanden ist, welches zu einem Lufteinschluss führen könnte und die Verschweißung beeinträchtigen würde. Ferner ist durch die Abstützung der ersten Stirnfläche 22 gegen die zweite Anlagefläche 26 sowie der Abstützung der ersten Anlagefläche 23 gegen die zweite Stirnfläche 27 eine Anzugsbegrenzung gewährleistet, durch die eine Überbelastung vermieden wird, bei der aufgrund der konusförmigen Innenumfangsfläche 17 und der konusförmigen Außenumfangfläche 25 hohe Radialkräfte auftreten würden, die eine zu große Verformung des Anschlussabschnitts 2 und des Verbindungsabschnitts 8 zur Folge hätten.

Um im eingeschobenen Zustand des Verbindungsabschnitts 8 das Kunststoffrohr 1 und das weitere Kunststoffrohr 9 axial zu sichern, bildet der Basiskörper 14 eine vom Verbindungsabschnitt 8 abgewandte erste Stützfläche 29. Der Verbindungsabschnitt 8 weist eine entsprechende zweite Stützfläche 30 auf, welche der ersten Stützfläche 29 abgewandt ist. Somit lassen sich Spannelemente vorsehen, welche gegen die erste Stützfläche 29 und die zweite Stützfläche 30 abgestützt sind und eine Axialkraft aufbringen, so dass zwischen der Innenumfangsfläche 17 und der Außenumfangsfläche 25 eine Fügedruck herrscht, welcher für eine sichere Verschweißung erforderlich ist.

Nach dem Einführen des Verbindungsabschnitts 8 in die Anschlussbohrung 16 und dem axialen Verspannen des Anschlussabschnitts 2 und des Verbindungsabschnitts 8 wird der Widerstandsheizdraht 15 an eine elektrische Stromquelle angeschlossen und aufgrund des elektrischen Widerstands der Seele 19 erhitzt. Hierbei wird die Schmelztemperatur des Kunststoffs erreicht, so dass sich ein Aufschmelzbereich 28 bildet, in dem Material des Anschlussabschnitts 2 und das Material des Verbindungsabschnitts 8 thermisch stoffschlüssig miteinander verbunden sind.

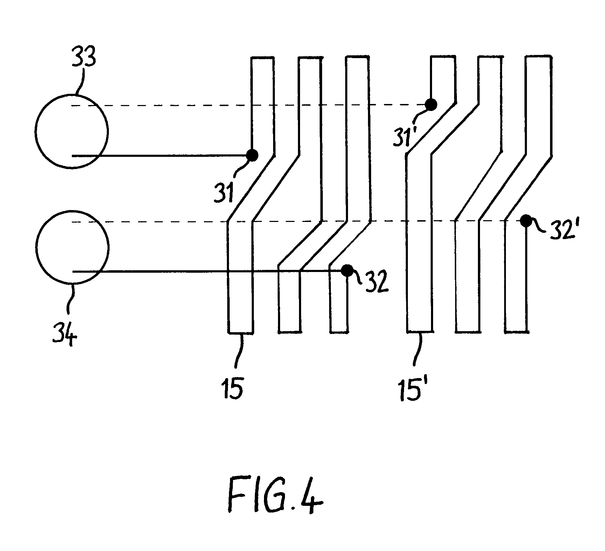

Es können auch mehrere wendelförmige Wellen 18 vorgesehen werden, in die mehrere Widerstandsheizdrähte 15 eingelegt sind. Fig. 4 zeigt eine schematische Darstellung des Schaltaufbaus, im Fall, dass zwei Widerstandsheizdrähte 15, 15' vorgesehen sind. Beide Widerstandheizdrähte 15, 15' sind wendelförmig ausgeführt und weisen jeweils einen ersten elektrischen Anschluss 31, 31' und einen zweiten elektrischen Anschluss 32, 32' auf. Die beiden ersten elektrischen Anschlüsse 31, 31' sind gemeinsam mit einem ersten elektrischen Anschlusspol 23 verbunden. Die zweiten elektrischen Anschlüsse 32, 32' sind gemeinsam mit einem zweiten elektrischen Anschlusspol 34 verbunden. Die beiden elektrischen Anschlusspole 33, 34 lassen sich mit herkömmlichen Schweißgeräten verbinden.

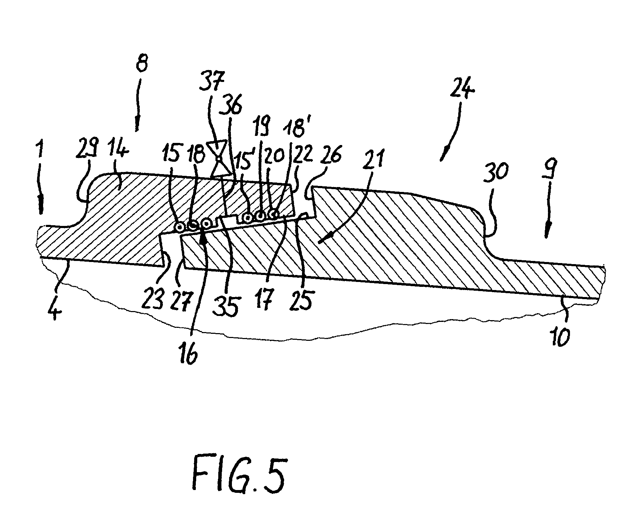

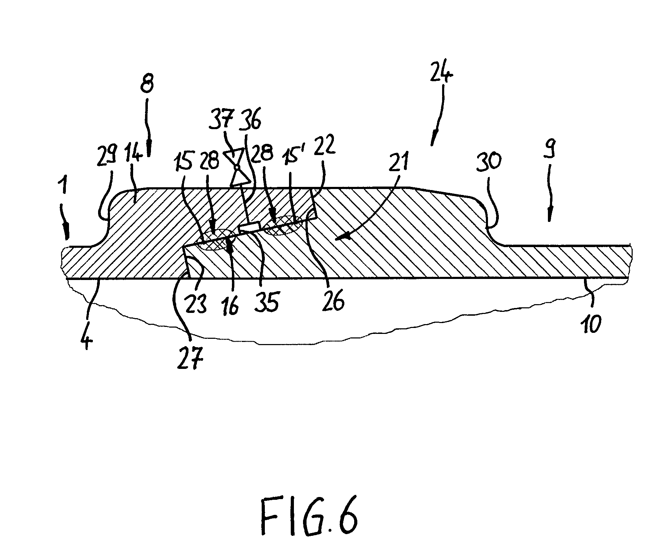

Die Fig. 5 und 6 zeigen einen Teillängsschnitt durch eine Verbindungsanordnung mit zwei Widerstandsheizdrähten. Bauteile, die mit Bauteilen der Verbindungsanordnung gemäß der Fig. 2 und 3 übereinstimmen, sind mit gleichen Bezugszeichen versehen und dort beschrieben.

Die beiden Widerstandsheizdrähte 15, 15' sind wendelförmig in zwei Rillen 18, 18' der Innenumfangsfläche 17 eingelegt. Die beiden Widerstandsheizdrähte 15, 15' sind axial beabstandet hintereinander angeordnet. Zwischen den Widerstandsheizdrähten 15, 15' ist eine umlaufende Ringnut 35 in die Innenumfangsfläche 17 eingebracht. Die Ringnut 35 ist leitungsmäßig mit einer Anschlussbohrung 36 verbunden. Die Anschlussbohrung 36 ist wiederum mit einem Ventil 37 verbunden, über welches die Anschlussbohrung 36 nach außen hin abgesperrt werden kann. Über das Ventil 37 lässt sich eine Druckluftquelle anschließen, so dass die Ringnut 35 nach dem Verschweißen mit Druckluft beaufschlagt werden kann. Im Anschluss daran lässt sich die Ringnut 35 und Anschlussbohrung 36 nach außen hin absperren und nach einer vorbestimmten Zeit überprüfen, ob ein Druckabfall stattgefunden hat. Sofern der Druckabfall eine vorgegebene Grenze nicht überschreitet, ist sichergestellt, dass die Verschweißung ordnungsgemäß durchgeführt wurde.

### Bezugszeichenliste

- 1: Kunststoffrohr
- 2: Anschlussabschnitt
- 3: Längsachse
- 4: Innenfläche
- 5: erster Rohrkörper
- 6: zweiter Rohrkörper
- 7: Hohlprofil
- 8: Verbindungsabschnitt
- 9: weiteres Kunststoffrohr
- 10: Innenfläche
- 11: erster Rohrkörper
- 12: zweiter Rohrkörper
- 13: Hohlprofil
- 14: Basiskörper
- 15, 15': Widerstandsheizdraht
- 16: Anschlussbohrung
- 17: Innenumfangsfläche
- 18, 18': Rille
- 19: Seele
- 20: Umhüllung
- 21: Öffnung
- 22: erste Stirnfläche
- 23: erste Anlagefläche
- 24: Verbindungsabschnitt
- 25: Außenumfangsfläche
- 26: zweite Anlagefläche
- 27: zweite Stirnfläche
- 28: Aufschmelzbereich
- 29: erste Stirnfläche
- 30: zweite Stirnfläche
- 31, 31': erster elektrischer Anschluss
- 32, 32': zweiter elektrischer Anschluss
- 33: erster elektrischer Anschlusspol
- 34: zweiter elektrischer Anschlusspol
- 35: Ringnut
- 36: Anschlussbohrung
- 37: Ventil

## Patentansprüche

1. Kunststoffrohr aus einem thermoplastischen Kunststoff umfassend
- eine Längsachse (3) und
- einen Anschlussabschnitt (2) mit einer ersten Umfangsfläche (17),
- wobei in die erste Umfangsfläche (17) ein Widerstandsheizdraht (15, 15') umlaufend eingelassen ist und
- wobei die erste Umfangsfläche (17) zur thermisch-stoffschlüssigen Verbindung mit einer zweiten Umfangsfläche (25) eines Verbindungsabschnitts (8) eines weiteren Kunststoffrohrs (9) bestimmt ist,
**dadurch gekennzeichnet,**
**dass** die erste Umfangsfläche (17) konisch ausgebildet ist und zur Verbindung mit einer gegengleich ausgebildeten konischen zweiten Umfangsfläche (25) bestimmt ist.

2. Kunststoffrohr nach Anspruch 1,
**dadurch gekennzeichnet,**
**dass** die erste Umfangsfläche (17) durch ein spanendes Fertigungsverfahren hergestellt ist.

3. Kunststoffrohr nach Anspruch 1 oder 2,
**dadurch gekennzeichnet,**
**dass** der Anschlussabschnitt (2) eine umlaufende erste Stirnfläche (22) aufweist, an die sich die erste Umfangsfläche (17) anschließt und die zur Anlage an eine zur ersten Stirnfläche (22) gegengleich ausgebildeten zweiten Anlagefläche (26) des weiteren Kunststoffrohres (9) bestimmt ist.

4. Kunststoffrohr nach Anspruch 3,
**dadurch gekennzeichnet,**
**dass** an dem der ersten Stirnfläche (22) abgewandten axialen Ende der ersten Umfangsfläche (17) letztere in eine umlaufende erste Anlagefläche (23) übergeht, die zur Anlage an eine zur ersten Anlagefläche (23) gegengleich ausgebildeten zweiten Stirnfläche (27) des weiteren Kunststoffrohres (9) bestimmt ist.

5. Kunststoffrohr nach den Ansprüchen 1 bis 4,
**dadurch gekennzeichnet,**
**dass** der Anschlussabschnitt (2) eine Anschlussbohrung (16) mit einer die erste Umfangsfläche bildenden konischen Innenumfangsfläche (17) aufweist,
wobei in die Anschlussbohrung (16) der Verbindungsabschnitt (8) des weiteren Kunststoffrohres (9) axial durch eine Öffnung (21) der Anschlussbohrung (16) einführbar ist, und
wobei die Innenumfangsfläche (17) zur Öffnung (21) hin erweitert ist.

6. Kunststoffrohr nach Anspruch 5,
**dadurch gekennzeichnet,**
**dass** die Innenumfangsfläche (17) einen Winkel von 10° bis 25° einschließt.

7. Kunststoffrohr nach Anspruch 5 oder 6,
**dadurch gekennzeichnet,**
**dass** die erste Stirnfläche (22) rechtwinklig zur Innenumfangsfläche (17) verläuft.

8. Kunststoffrohr nach den Ansprüchen 5 bis 7,
**dadurch gekennzeichnet,**
**dass** die erste Anlagefläche (23) rechtwinklig zur Innenumfangsfläche (17) verläuft.

9. Kunststoffrohr nach den Ansprüchen 1 bis 8,
**dadurch gekennzeichnet,**
**dass** ein dem Anschlussabschnitt (2) abgewandter Verbindungsabschnitt vorgesehen ist.

10. Kunststoffrohr nach Anspruch 9,
**dadurch gekennzeichnet,**
**dass** der Verbindungsabschnitt eine eine zweite Umfangsfläche bildende konische Außenumfangsfläche aufweist, die gegengleich zur konischen Innenumfangsfläche (17) ausgebildet ist.

11. Kunststoffrohr nach den Ansprüchen 9 oder 10,
**dadurch gekennzeichnet,**
**dass** der Verbindungsabschnitt eine umlaufende der ersten Stirnfläche (22) abgewandte zweite Stirnfläche aufweist, an die sich die konische Außenfläche anschließt und die zur Anlage an eine zur zweiten Stirnfläche gegengleich ausgebildeten ersten Anlagefläche eines weiteren Kunststoffrohres bestimmt ist,
**dass** an dem der zweiten Stirnfläche abgewandten axialen Ende der konischen Außenfläche letztere in eine umlaufende zweite Anlagefläche übergeht, die zur Anlage an eine zur zweiten Anlagefläche gegengleich ausgebildeten ersten Stirnfläche des weiteren Kunststoffrohres bestimmt ist.

12. Kunststoffrohr nach den Ansprüchen 9 bis 11,
**dadurch gekennzeichnet,**
**dass** der Anschlussabschnitt (2) eine Außenfläche aufweist, die eine der Öffnung (21) abgewandte umlaufende erste Stützfläche (29) bildet.

13. Kunststoffrohr nach den Ansprüche 9 bis 12,
**dadurch gekennzeichnet,**
**dass** der Verbindungsabschnitt eine Außenfläche aufweist, die eine der Öffnung (21) abgewandte umlaufende zweite Stützfläche bildet.
